# EUROPÄISCHE PATENTSCHRIFT

(11) **EP 0 366 032 B1**
(45) Veröffentlichungstag und Bekanntmachung des Hinweises auf die Patenterteilung: **31.03.1993**
(21) Anmeldenummer: 89119579.4
(22) Anmeldetag: 21.10.1989
(51) Int. Cl.: F16H 57/04

(54) **Vorrichtung zum Schmieren eines Planetengetriebes**
Lubricating device for a planetary gearing
Dispositif de lubrification pour engrenage planétaire

(30) Priorität: 25.10.1988 DE 3836260; 07.09.1989 DE 3929743
(43) Veröffentlichungstag der Anmeldung: 02.05.1990
(73) Patentinhaber: Iveco Magirus Aktiengesellschaft, D-89017 Ulm (DE)
(72) Erfinder: Lengl, Franz, D-7901 Illerkirchberg 2 (DE)
(74) Vertreter: Hanke, Hilmar

(56) Entgegenhaltungen:
- DE-A- 2 033 271
- DE-A- 3 407 613
- US-A- 2 408 336

## Beschreibung

Die Erfindung betrifft eine Vorrichtung zum Schmieren eines Planetengetriebes gemäß Oberbegriff des Patentanspruchs 1.

Aus der DE-A-3 407 613 ist eine Vorrichtung zum Schmieren eines Planetengetriebes der vorgenannten Art bekannt, bei dem die Schmierung der Planetenrad-Lagerbolzen auf konventionelle Art mit einer in den Ölsumpf eintauchenden Bohrung im Bolzeninnern gelöst ist. Zwar ist die Schmiermittelzuführung von Planetenrad und Sonnenrad auch für hohe Drehzahlen geeignet. Bei hohen Drehzahlen entsteht jedoch im Bereich der Lagerbolzen der Planetenräder ein Ölmangel, so daß die zwischen Bolzen und Planetenräder angeordneten Wälzlagerkörper nicht ausreichend mit Schmiermittel versorgt werden.

Aufgabe der Erfindung ist die Schaffung einer Schmiervorrichtung der eingangs genannten Art, die mit Hilfe einfacher Mittel bei einem Außenplaneten-Antriebsachsengetriebe auch bei höheren Drehzahlen auch für einen ausreichenden Schmiermittelfluß an den Lagern der Planetenräder sorgt.

Gelöst wird die der Erfindung zugrundeliegende Aufgabe durch die im kennzeichnenden Teil des Anspruchs 1 angegebenen Mittel.

Vorteilhaft weitergebildet wird der Erfindungsgegenstand durch die Merkmale der Unteransprüche 2 bis 10.

Wesen der Erfindung ist mithin die Ausbildung zweier Schmiermittelringe durch Zentrifugalkraft des sich drehenden Gehäuses im Betrieb ohne Zuhilfenahme einer Schmiermittel- bzw. Ölpumpe. Der erste Schmiermittelring versorgt den feststehenden Zahnring mit Öl, in welchem die Planetenräder kämmen. Durch die sich drehenden Planetenräder gelangt das Schmiermittel zum zentralen Sonnenrad. Das anstehende Spritzöl wird durch vorzugsweise mehrere um das Sonnenrad herum im Planetenradträger angeordnete Schmiermittelauffangwannen aufgefangen und gelangt von dort jeweils über eine Abflußschräge und jeweils eine schräge Bohrung in Richtung Gehäusedeckel in einen radial äußeren Gehäusespalt zwischen Gehäusedeckel und Planetenradträger , so daß durch die Zentrifugalkraft des sich drehenden Gehäuses nebst Plantenradträger im Gehäusespalt ein zweiter Schmiermittelring entsteht, der die Lager der Planetenräder mit Schmiermittel ohne Zuhilfenahme einer Schmiermittel- bzw. Ölpumpe versorgt. Insbesondere sind in den Planetenradbolzen Axialbohrungen mit radialen Anschlußbohrungen vorgesehen. Die Eintrittsöffnung jeder Axialbohrung liegt hierbei bei Drehung des Gehäuses innerhalb des Zweiten Schmiermittelrings, so daß über die Austrittsöffnungen der Radialanschlußbohrungen die Wälzlagerkörper zwischen den Bolzen und den Planetenrädern in jedem Betriebszustand ausreichend mit Öl versorgt werden, insbesondere auch bei höheren Betriebsdrehzahlen des Planetengetriebes. Von den Wälzlagerkörpern gelangt das Schmiermittel wieder zurück zum ersten Schmiermittelring.

Durch die Erfindung wird eine Verbesserung des Schmierölflusses an einem Außenplaneten-Antriebsachsengetriebe geschaffen, das zuverlässig auch die Planetenradbolzen mit Öl versorgt. Um den Ölfluß zu den Planetenrädern zu vergrößern, wird der Planetenradträger als Gußkörper mit rauher Oberfläche ausgebildet, so daß ohne zusätzliche Bearbeitungen ein sog. Zahnradpumpeneffekt entsteht, der die Förderung des am Planetenradträgers anstehenden Ölrings zum Sonnenrad merklich erhöht und ferner ein Rückschleudern von Öl durch Fliehkraft nach außen weitgehenst verhindert. Von Vorteil ist ferner die Kühlung des abspritzenden Öls-vom Sonnenrad am Gehäusedeckel des Planetengetriebes.

Aus US-A-2 408 336 sind zwar Axialbohrungen und Radialbohrungen bei den Planetenrädern vorgesehen, durch welche Schmiermittel durch Zentrifugalkraft in Wälzlagerkörpern zugeführt wird; das Schmiermittel wird jedoch mittels externer Pumpe von einem Ölreservoir zugeleitet und diesem durch eine Hydraulikverbindung wieder zugeführt, die zwischen der Bodenseite des feststehenden Planetengetriebegehäuses und dem Ölreservoir verlegt ist. Demgegenüber kommt die Erfindung ohne Ölpumpe aus.

Die ferner aus DE-B-2 033 271 bekannte Schmiervorrichtung für ein Planetengetriebe sieht insbesondere eine Schmierung für die zentralen Radlager vor, wobei das Gehäuse im Betrieb rotiert und selbst den Planetenträger ausbildet, in welchem sich während des Betriebes ein Ölring durch Zentrifugalkraft bildet. In den Ölring taucht ein feststehendes Radialrohr ein, durch welches im Betrieb die Zentrlfugalkraft aufgehoben wird und das Öl radial einwärts in Richtung der zentralen Radlagerstellen transportiert wird. Die erfindungsgemäße Schmierung der Wälzlagerkörper ist in DE-B-2 033 271 nicht angesprochen.

Die Erfindung wird nachfolgend anhand eines Ausführungsbeispiels unter Bezugnahme auf die beigefügte Zeichnung näher erläutert; es zeigen:
Fig. 1 einen Axialschnitt durch das Planetengetriebe, und

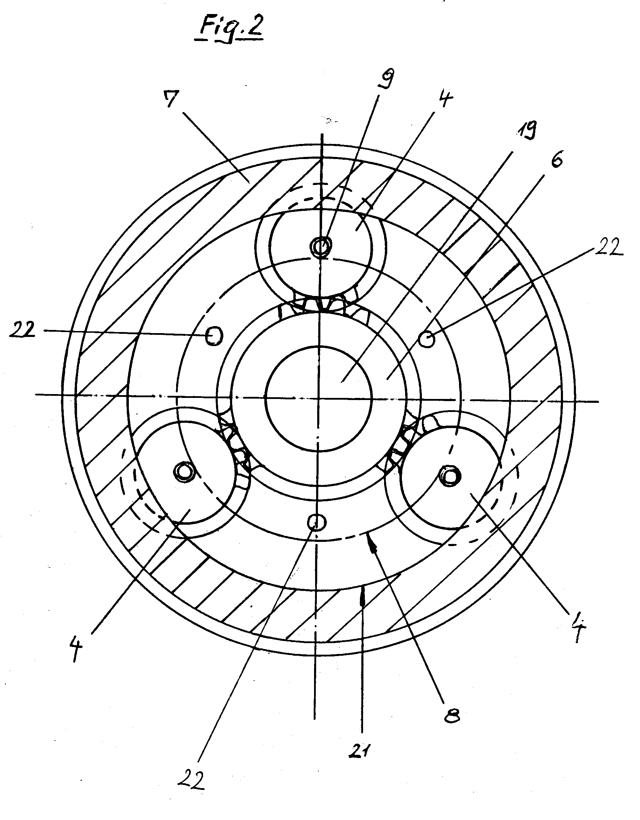

Fig. 2 einen schematischen Querschnitt durch das Getriebe nach Fig. 1.

Das in der Zeichnung dargestellte Planetengetriebe (1) ist ein sog. Außenplaneten-Antriebsachsengetriebe mit einem zentralen Sonnenrad (6), das fest mit einer von einem nicht veranschaulichten Motor angetriebenen Welle (19) verbunden ist. Antriebswelle (19) und Sonnenrad (6) befinden sich auf der gemeinsamen Symmetrieachse (20).

Das Sonnenrad (6) kämmt mit radial äußeren Planetenrädern (4), die radial außenseitig mit einem hohlen feststehenden Zahnring (5) kämmen, der durch die Achsbrücke (16) abgestützt ist, welche die Antriebswelle (19) umschließt.

Die Achsbrücke (16) stützt ferner über Wälzkörper (14) eine im Betrieb sich drehende Nabe (14a) ab, die mit dem gleichzeitig den Planetenradträger (18) bildenden Gehäuse (2) durch Verschraubung verbunden ist. Im Planetenradträger (18) sind Bolzen (3) aufgenommen, welche fest durch einen angeschraubten Gehäusedeckel (7) verspannt sind. Im besonderen besitzt jeder Bolzen (3) einen Befestigungsflansch (13), der zwischen Gehäusedeckel (7) und Planetenradträger (18) gelegen und durch den letztgenannten Gehäusedeckel (7) verspannt ist. Die Bolzen (3) nehmen umfangsmäßig Wälzlagerkörper (15) auf, welche die Planetenräder (4) lagernd abstützen. Im Betrieb des Planetengetriebes (1) drehen sich die Bolzen (3) in fester Anordnung zusammen mit dem den Planetenradträgern (18) bildenden Gehäuse (2) und dem Gehäusedeckel (7).

Jeder Bolzen (3) umfaßt eine zentrale Axialbohrung (9) in Form einer Sackbohrung, die mit jeweils zwei Radialanschlußbohrungen (10) kommuniziert, die zueinander ausgerichtet sind, d.h. zusammen eine gemeinsame Durchgangsbohrung im Bolzen (3) ausbilden. Die Austrittsöffnungen der Radialanschlußbohrungen (10) liegen in einem mittigen Bereich zwischen zwei Wälzlagerkörperreihen (15), während die Eintrittsöffnungen der Axialbohrungen (9) in einem radial äußeren Gehäusespalt (8) liegen, der bei Drehung des Gehäuses (2) einen radial äußeren Schmiermittelring ausbildet infolge der einwirkenden Zentrifugalkraft.

Um das Sonnenrad (6) herum befinden sich drei Schmiermittelauffangwannen (11), die im Ausführungsbeispiel der Zeichnung integriert mit dem Planetenradträger (18) jeweils in der Mitte zwischen benachbarten Planetenrädern (4) ausgebildet sind. Die Schmiermittelauffangwannen (11) besitzen jeweils an ihrer radial äußeren Stelle eine Abflußschräge (12) in Richtung Gehäusedeckel (7) über jeweils eine schräge Bohrung (22) bis hin zum Gehäusespalt (8).

Eigentlicher Zahnring (5) und Achsbrücke (16) sind fest miteinander verbunden. Der Schmiermittelrücklauf zum ersten Schmiermittelring (21) erfolgt über die Verzahnung (17) und den Spalt (23).

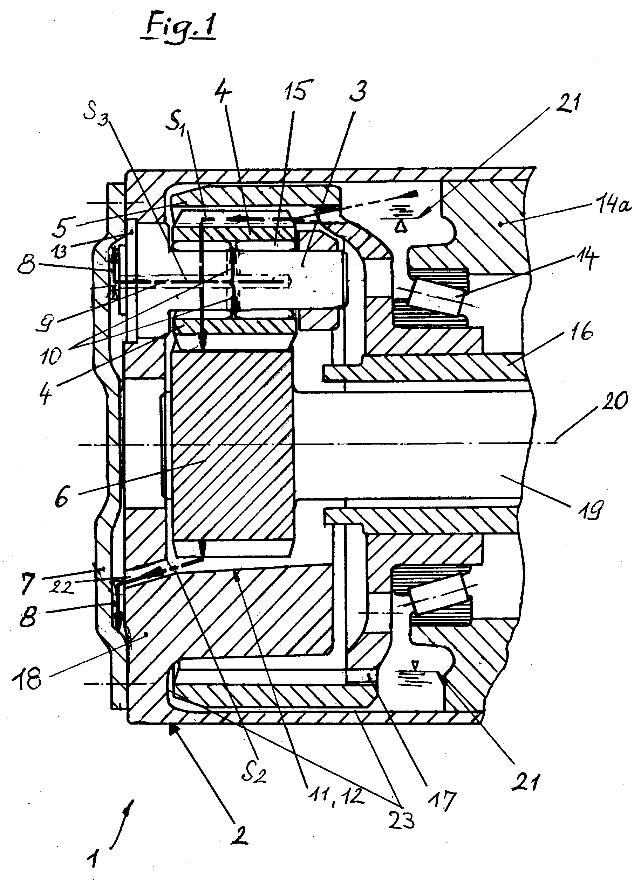

Nachfolgend wird der Schmiermittelkreislauf beschrieben. Durch Drehung des Gehäuses (2) des betriebenen Planetengetriebes (1) entsteht durch Zentrifugalkraft ein erster Schmiermittelring (21), so daß der Zahnring (5) innerhalb des ersten Schmiermittelringes (21) liegt. Dadurch werden auch die Zahnflanken der Planetenräder (4) mit Schmiermittel versorgt, so daß das Schmiermittel bzw. das Öl auf die Zähne des Sonnenrades (6) befördert wird, wie dies der Schmiermittelfluß S1 in der Fig. 1 zeigt. Das vom Sonnenrad (6) abspritzende Schmiermittel wird in den sich drehenden Schmiermittelauffangwannen (11) aufgefangen und anschließend durch die drei schräg im Planetenradträger (18) angebrachten Bohrungen (22) längs des Schmiermittelflusses S2 in den Gehäusespalt (8) zwischen Gehäusedeckel (7) und der Stirnseite des Planetenradträgers (18) befördert. Durch die schmale Ausbildung des Gehäusespalts (8) und den sich drehenden Planetenradträger (18) entsteht aufgrund der Zentrifugalkraft im Gehäusespalt (8) ein zweiter Schmiermittelring, dessen innere Begrenzung denselben Radius besitzt, welchen auch die drei Axialbohrungen (9) der Planetenradbolzen (3) beschreiben, wenn sie um die Symmetrieachse (20) rotieren. Durch Rotation entsteht mithin eine Zwangsmittelschmierung in den Axialbohrungen (9) sowie in den Radialanschlußbohrungen (10) bis hin zu den Wälzlagerkörpern (15) der Planetenräder (4). Letztgenannter Schmiermittelfluß ist durch S₃ in Fig. 1 dargestellt. Schließlich gelangt das überschüssige Schmiermittel durch die Verzahnung (17) und den Spalt (23) zurück zum ersten Schmiermittelring (21).

Um einen vergrößerten Schmiermittelfluß zu den Planetenrädern (4) zu schaffen, wird der Planetenradträger (18) als Gußkörper so ausgebildet, daß ohne zusätzliche Bearbeitung ein sog. Zahnradpumpeneffekt entsteht, der die Förderung des am Planetenradträger anstehenden Schmiermittelrings zum Sonnenrad (6) merklich erhöht und ferner ein Rückschleudern von Schmiermittel durch Fliehkraft nach außen weitgeherst verhindert.

Ersichtlich wird mithin durch die Erfindung eine Zwangsschmierung der Planetenradbolzen bei jeder Drehzahl durch Zentrifugalkraft und Öldrossel im Bolzen geschaffen. Durch den Zahnradpumpeneffekt ergibt sich eine ausreichende Schmierung. Durch das abspritzende Öl vom Sonnenrad am Gehäusedeckel des Planetengetriebes wird das Öl bzw. das Schmiermittel gekühlt.

## Patentansprüche

1. Vorrichtung zum Schmieren eines Planetengetriebes (1), mit einem sich drehenden Gehäuse (2),einem stirnseitig am Gehäuse (2) angeordneten Gehäusedeckel (7), einem zwischen Gehäuse (2) und Gehäusedeckel (7) vorhandenen Gehäusespalt (8), mit Planetenrädern (4), welche mittels Wälzlagerkörper (15) auf Bolzen (3) gelagert sind, die je eine axiale Sackbohrung (9) und Radialanschlußbohrungen (10) aufweisen, welche zu den Schmierstellen (Wälzlagerkörper 15 der Planetenräder 4) führen, einem mit den Planetenrädern (4) kämmenden, im Gehäuse (2) angeordneten Zahnring (5), sowie einem ebenfalls mit den Planetenrädern (4) kämmenden Sonnenrad (6), wobei das Gehäuse (2) so ausgebildet ist, daß sich im Betrieb darin ein erster Schmiermittelring (21) bilden kann, der der Schmierung der Verzahnung des Zahnrings (5) dient,
dadurch gekennzeichnet,
daß das Gehäuse (2) gleichzeitig als Planetenradträger ausgebildet ist, daß die Bolzen (3) im Gehäuse (2) angeordnet und deren axiale Sackbohrungen (9) zum Gehäusespalt (8) hin geöffnet sind, daß das Gehäuse (2) zwischen den Planetenrädern (4) eine schräg zum Gehäusedeckel (7) abfallend verlaufende Schmiermittelauffangwanne (11) aufweist, welche mittels Durchtrittsbohrungen (22) mit dem Gehäusespalt (8) verbunden sind, wobei der Radialabstand der Öffnungen der Durchtrittsbohrungen (22) zum Gehäusespalt hin größer ist als der Radialabstand der Öffnungen der axialen Sackbohrungen (9), und der Gehäusespalt (8) eine radiale Erstreckung besitzt, welche größer ist als der Radialabstand der Öffnungen der Durchtrittsbohrungen (22) und zumindest bis zu den Öffnungen der axialen Sackbohrungen (9) reicht.

2. Vorrichtung nach Anspruch 1,
dadurch gekennzeichnet,
daß auch die Durchtrittsbohrungen (22) zum Gehäusedeckel (7) schräg abfallend verlaufen.

3. Vorrichtung nach Anspruch 1 oder 2,
dadurch gekennzeichnet,
daß die Schmiermittelauffangwanne (11) in der Mitte zwischen zwei benachbarten Planetenrädern (4) liegt.

4. Vorrichtung nach einem der Ansprüche 1 bis 3,
dadurch gekennzeichnet,
daß jeder Bolzen (3) zwei Radialanschlußbohrungen (10) besitzt, deren Achsen zueinander ausgerichtet sind.

5. Vorrichtung nach einem der Ansprüche 1 bis 4,
dadurch gekennzeichnet,
daß die Axialbohrung (9) des Bolzens (3) längs der Bolzenachse verläuft.

6. Vorrichtung nach einem der Ansprüche 1 bis 5,
dadurch gekennzeichnet,
daß jeder Bolzen (3) einen Befestigungsflansch (13) aufweist, der zwischen Gehäusedeckel (7) und Planetenradträger (18) gelegen und durch den an diesem befestigten Gehäusedeckel (7) festgespannt ist.

7. Vorrichtung nach einem der Ansprüche 1 bis 6,
dadurch gekennzeichnet,
daß das sich im Betrieb drehende Gehäuse (2) über eine mit diesem verschraubte Nabe (14a) durch Wälzkörper (14) an einer feststehenden Achsbrücke (16) des Zahnrings (5) abgestützt ist.

8. Vorrichtung nach Anspruch 7,
dadurch gekennzeichnet,
daß Achsbrücke (16) und eigentlicher Zahnring (5) zwei separate, fest miteinander verbundene Bauteile sind, die im Bereich ihrere Verbindungsstelle eine Verzahnung (17) besitzen.

9. Vorrichtung nach einem der Ansprüche 1 bis 8,
dadurch gekennzeichnet,
daß die Bolzen (3) der Planetenräder (4) in einem einstückigen Planetenradträger (18) aufgenommen sind.

10. Vorrichtung nach Anspruch 9,
dadurch gekennzeichnet,
daß der Planetenradträger (18) als Gußkörper mit rauher Oberfläche ausgebildet ist.

## Claims

1. A device for lubricating a planet gear (1), having a rotating casing (2), a cover (7) disposed on one end of the casing (2), a gap (8) between the casing (2) and the cover (7), planet wheels (4) mounted via rolling bearing members (15) on pins (3) each having an axial blind bore (9) and radial connecting bores (10) leading to the places to be lubricated (the rolling bearing members (15) of the planet wheels (4)), a toothed ring (5) disposed in the casing (2) and engaging the planet wheels (4), and a sun wheel (6) likewise engaging the planet wheels (4), in which the casing (2) is disposed so that a first ring of lubricant (21) con form therein during operation and lubricate the teeth of the gear ring (5), characterised in that the casing (2) is also constructed as a planet wheel carrier, the pins (3) are disposed in the casing (2) and their axial blind bores (9) open towards the gap (8), and between the planet wheels (4) the casing has a lubricant-holding trough (11) which slopes dawn towards the cover (7), the trough being connected to the gap (8) by through bores, in which the radial distance of the openings of the through bores (22) to the gap is greater than the radial distance of the openings of the axial blind bores (9), and the gap (8) has a radial extension which is greater than the radial distance of the openings of the through bores (22) and extends at least as far as the openings of the axial blind bores (9).

2. A device according to claim 1, characterised in that the through bores (22) also slope down to the cover (7).

3. A device according to claim 1 or 2, characterised in that the lubricant-holding trough (11) lies in the middle between two adjacent planet wheels (4).

4. A device according to any one of claims 1 to 3, characterised in that each pin (3) has two radial connecting bores (10), the axes of which are in line.

5. A device according to any one of claims 1 to 4, characterised in that the axial bore (9) in the pin (3) extends along the pin axis.

6. A device according to any one of claims 1 to 5, characterised in that each pin (3) has a securing flange (13) which in disposed between the cover (7) and the planet-wheel holder (18) and is clamped by the cover (7) secured to the planet-wheel holder.

7. A device according to any one of claims 1 to 6 characterised in that the casing (2), which rotates during operation, bears against a stationary axle bracket (16) of the toothed ring (5) via rolling members (14) and a hub (14a) screwed to the casing.

8. A device according to claim 7, characterised in that the axle bracket (16) and the actual toothed ring (5) are two separate, permanently connected components which are toothed (17)at the place where they are connected.

9. A device according to any one of claims 1 to 8, characterised in that the pins (3) of the planet wheels (4) are received in a one-piece planet-wheel carrier (18).

10. A device according to claim 9, characterised in that the planet-wheel carrier (18) is in the form of a cast member having a rough surface.

## Revendications

1. Dispositif de graissage d'un engrenage planétaire (1) comportant un boîtier (2) en rotation, un chapeau de boîtier (7) prévu sur la face avant du boîtier (2), un intervalle de boîtier (8) existant entre le boîtier (2) et le chapeau (7), des roues planétaires (4) montées sur des goujons (3) par l'intermédiaire d'organes de roulement (15), ces goujons ayant chacun un trou borgne axial (9) et des perçages de raccordement (10), radiaux, conduisant à des poins de graissage (organes de roulement 15 des roues planétaires 4), une couronne dentée (5) prévue dans le boîtier (2) et engrenant avec les roues planétaires (4), ainsi qu'une roue solaire (6) engrenant également avec les roues planétaires (4), le boîtier (2) étant réalisé pour qu'en fonctionnement il puisse s'y établir un premier anneau de fluide lubrifiant (21) qui sert au graissage des dents de la couronne dentée (5), dispositif caractérisé en ce que :
le boîtier (2) est réalisé en même temps comme support des roues planétaires, les goujons (3) sont prévus dans le boîtier (2) et leurs trous borgnes axiaux (9) sont ouverts en direction de l'intervalle de boîtier (8), le boîtier (2) ayant, entre les roues planétaires (4), des cuvettes de réception (11) pour l'agent lubrifiant, ces cuvettes descendant en biais vers le chapeau (7) en étant reliées à l'intervalle de boîtier (8) par l'intermédiaire de perçages traversants (22) et la distance radiale des ouvertures des perçages traversants (22) vers l'intervalle de boîtier est supérieure à la distance radiale des ouvertures des trous borgnes (9), axiaux, et l'intervalle (8) du boîtier présente un allongement radial supérieur à la distance radiale des ouvertures de passage (22) et arrive au moins jusqu'aux ouvertures des trous borgnes (9), axiaux.

2. Dispositif selon la revendication 1, caractérisé en ce que les perçages traversants (22) sont également dirigés en biais vers le bas en direction du chapeau de boîtier (7).

3. Dispositif selon la revendication 1 ou 2, caractérisé en ce que la cuvette de réception de fluide lubrifiant (11) se trouve au milieu entre deux roues planétaires (4) voisines.

4. Dispositif selon l'une des revendications 1 à 3, caractérisé en ce que chaque goujon (3) comporte deux perçages de raccordement radiaux (10) dont les axes sont alignés.

5. Dispositif selon l'une des revendications 1 à 4, caractérisé en ce que le perçage axial (9) du goujon (3) correspond à l'axe du goujon.

6. Dispositif selon l'une des revendications 1 à 5, caractérisé en ce que chaque goujon (3) comporte une bride de fixation (13) située entre le chapeau (7) et le support (18) des roues planétaires, en étant fixé par cette bride au chapeau de boîtier (7).

7. Dispositif selon l'une des revendications 1 à 6, caractérisé en ce que le boîtier (2) qui tourne pendant le fonctionnement est soutenu par un moyeu (14a) vissé au boîtier, par l'intermédiaire d'organes de roulement (14) sur un corps d'essieu (16), fixe, de la couronne dentée (5).

8. Dispositif selon la revendication 7, caractérisé en ce que le corps d'essieu (16) et la couronne dentée (5) proprement dite sont deux pièces distinctes reliées solidairement l'une à l'autre et ayant une denture (17) au niveau de leur zone de liaison.

9. Dispositif selon l'une des revendications 1 à 8, caractérisé en ce que les goujons (3) des roues planétaires (4) sont montés dans un support (18) de roues planétaires, en une seule pièce.

10. Dispositif selon la revendication 9, caractérisé en ce que le support de roues planétaires (18) est une pièce en fonte à surface extérieure rugueuse.
